# EUROPÄISCHE PATENTSCHRIFT

(11) **EP 1 275 470 B1**
(45) Veröffentlichungstag und Bekanntmachung des Hinweises auf die Patenterteilung: **21.01.2009**
(21) Anmeldenummer: 02014769.0
(22) Anmeldetag: 04.07.2002
(51) Int. Cl.: B23Q 15/22, B23Q 17/22, B23Q 17/24, B23Q 16/00, B25H 7/04

(54) **Einrichtung zum zielgeführten Positionieren eines handgeführten Werkzeuggeräts**
Device for targeted positioning of a hand-held machine tool
Dispositif pour guider une machine outil portative à un position cible

(30) Priorität: 09.07.2001 DE 10133321
(43) Veröffentlichungstag der Anmeldung: 15.01.2003
(73) Patentinhaber: Metabowerke GmbH, 72602 Nürtingen (DE)
(72) Erfinder: Gläser, Andreas, Dipl.-Ing., 70182 Stuttgart (DE); Knihs, Martin, 71726 Benningen (DE); Kuhlmann, Heiner, Dr.-Ing., 70499 Stuttgart (DE); Möhlenbink, Wolfgang, Prof.Dr.-Ing., 73730 Esslingen (DE)
(74) Vertreter: Dreiss, Fuhlendorf, Steimle & Becker

(56) Entgegenhaltungen:
- EP-A- 1 249 291
- WO-A-00/44535
- DE-A- 4 336 730
- DE-A- 19 909 479
- PATENT ABSTRACTS OF JAPAN vol. 017, no. 438 (P-1591), 12. August 1993 (1993-08-12) & JP 05 093620 A (AISIN SEIKI CO LTD), 16. April 1993 (1993-04-16)

## Beschreibung

Die Erfindung betrifft eine manuell handhabbare Einrichtung zum zielgeführten Positionieren eines handgeführten elektromotorisch antreibbaren Werkzeuggeräts, insbesondere einer elektromotorisch antreibbaren Bohrmaschine, in eine vorgegebene oder vorgebbare Arbeitsposition.

WO-A-00/44535 zeigt eine Markier- oder Beschriftungseinrichtung mit einem handgeführten Träger mit einem Beschriftungsmechanismus, mit einer Vorrichtung zum Erfassen der Lage des Trägers gegenüber einem Bezugssystem, und mit einerZielführungsvorrichtung, welche unter Verarbeitung von die Lage des Trägers bezeichnenden Daten und von die Arbeitsposition bezeichnenden Daten einem Benutzer Informationen zum Führen des Trägers vermittelt.

In der Anwendung, beispielsweise beim Ausbau von Gebäuden, insbesondere bei der Planung und beim Einbau von Küchen oder beim Aufhängen von Gegenständen an Wänden ergeben sich regelmäßig folgende Basisanforderungen: es soll ein Gegenstand (über in einem bestimmten Abstand zueinander vorgesehene Befestigungsmittel) an einer Wand oder an einem anderen beliebigen Gegenstand entsprechend der Planungsvorgabe befestigt werden. Hierfür müssen dann üblicherweise in einem bestimmten Abstand voneinander und insbesondere in horizontaler Ausrichtung Montagestellen durch Einsatz von handgeführten Werkzeuggeräten geometrisch exakt vorbereitet oder markiert werden. Im Besonderen handelt es sich häufig um die Anbringung von Bohrlöchern zum Einsatz von Befestigungsmitteln.

Dabei stellt sich regelmäßig die Anforderung, dass im Raum oder an einer Wand zu positionierende Objekte plangerecht in einem bestimmten Abstand zu einer Wand, zu einem Boden oder einer Decke anzubringen sind. Nach Anbringung eines ersten Objektes ergibt sich ggf. die Notwendigkeit, ein zweites Objekt in einem bestimmten Abstand oder in einer bestimmten Orientierung zu dem ersten Objekt anzuordnen. Häufig sollen Montagepositionen entlang einer Geraden, insbesondere horizontal verlaufend, vorbereitet werden, oder es ergibt sich die Anforderung, dass parallel zu einer Bezugslinie in einem bestimmten Abstand zu dieser Bezugslinie eine Anzahl von Montagepositionen vorgesehen werden sollen.

Bei der Ausführung der vorstehend beschriebenen und nur beispielhaft, jedoch nicht abschließend aufgezählten Anforderungen wird der Handwerker, Installateur oder Monteur vor Ort häufig vor große Probleme gestellt, die auch durch nicht ideale, also unebene Wandfluchten und vor allem Genauigkeitsfehler bei der von Hand, also unter Zuhilfenahme eines Meterstabs ausgeführten Markierarbeiten noch vergrößert werden. Jedenfalls gestaltet sich die Erfüllung der üblichen Basisanforderungen regelmäßig als in höchstem Maße zeitaufwendig, wenn hohe Anforderungen an die Genauigkeit der Ausführung gestellt werden.

Es wurden bereits Vorschläge unterbreitet, hier Abhilfe zu schaffen. So beschreibt DE 199 02 075 A1 eine Markiereinrichtung, wobei ein horizontal verlaufender Laserstrahl rotiert und demgemäss eine horizontal verlaufende Linie an den umgebenden Wänden eines Raums überstreicht. Ein auf oder an der Wand bewegbares Markiergerät umfasst ein lichtempfindliches Element sowie eine Markiereinrichtung. Jedes Mal, wenn das lichtempfindliche Element von dem rotierenden Laserstrahl getroffen wird, wird eine Farbmarkierung auf die Wand aufgebracht. Es kann so eine horizontale Linie erzeugt werden.

DE 43 36 730 A1 beschreibt eine Einrichtung für ein handgeführtes Elektrowerkzeug, nämlich eine Bohrmaschine, die das Ansetzen des Elektrowerkzeugs an eine Arbeitsposition in einem vorgegebenen, insbesondere 90° betragenden Winkel zu einer Ebene ermöglicht. Mittels Sendern und Empfängern für Ultraschall, elektromagnetische Wellen, wie Licht-, Hochfrequenz-Wellen oder sichtbarem Licht, sowie mittels einer Auswerteeinrichtung werden dem Benutzer Informationen hinsichtlich der Orientierung des Werkzeugs gegeben. Die Druckschrift befasst sich jedoch ausschließlich mit der Ausrichtung des Werkzeugs gegenüber dem Werkstück.

Außerdem sind aus DE 43 36 730 A1 und EP 0 306 485 B1 Messeinrichtungen an Elektrohandwerkzeuggeräten bekannt, mittels derer eine horizontale Ausrichtung des Werkzeuggeräts oder die Bohrtiefe gemessen oder angezeigt werden können.

Hiervon ausgehend liegt der vorliegenden Erfindung die Aufgabe zugrunde, die Ausführung oder Erfüllung der eingangs angeführten Basisanforderungen, die sich beim Einsatz von handgeführten Werkzeuggeräten ergeben, zu erleichtern und zu vereinfachen und vor allem den damit verbundenen Zeitaufwand zu reduzieren.

Diese Aufgabe wird gelöst durch eine manuell handhabbare Einrichtung zum zielgeführten Positionieren eines handgeführten Werkzeuggeräts mit den Merkmalen des Anspruchs 1.

Mit der vorliegenden Erfindung wird also erstmalig eine Einrichtung vorgegeben bzw. die Möglichkeit geschaffen, bei handgeführten Werkzeuggeräten eine vorgegebene oder vorgebbare Arbeitsposition in einer Fläche oder im Raum zielgeführt zu erreichen, ohne dass manuell an der Fläche oder im Raum unter Verwendung eines Meterstabs oder dergleichen in zeitaufwendiger Weise die Arbeitsposition gekennzeichnet werden müsste. Es ist aber auch möglich, unter Verwendung der erfindungsgemäßen Einrichtung auf diese Weise Markierungen zur Kennzeichnung von Arbeitspositionen oder Werkzeugansetzstellen vorzusehen, wiederum ohne dass manuelle Vermessungsvorgänge unter Verwendung eines Meterstabs erforderlich sind.

Das Handwerkzeuggerät ist am Träger angeordnet, d.h. der Träger, der Befestigungsmittel für das Werkzeuggerät aufweist.

Zur Durchführung der Zielführung ist es jedoch erforderlich, dass zunächst mittels der Vorrichtung zum Erfassen der Lage, also der Position und Orientierung des Trägers gegenüber einem Bezugssystem, die momentane Lage des Trägers ermittelt und oder - wenn sie schon bekannt ist - in die Vorrichtung, beispielsweise über eine Tastatur, eingebbar ist. Dieser Vorgang, der auch als Einmessung des Trägers gegenüber einem Bezugssystem bezeichnet werden könnte, wird nach einer Ausführungsform der Erfindung quasi kontinuierlich durchgeführt und es werden jeweils die aktuellen Daten über die Lage des Trägers zur Zielführung verwendet und verarbeitet. Nach einer anderen Ausführungsform wird der Träger zu Beginn einmal eingemessen und es werden hieraus zur Positionsbestimmung erforderliche Transformationsparameter bestimmt, die im Zusammenwirken mit weiteren Lagegebern, beispielsweiße Messseilen, stets die aktuellen Daten über die Lage des Trägers für die Durchführung der Zielführung bereitstellen.

Ausgehend von der nunmehr bekannten Lage des Trägers und unter Verwendung von die zu erreichende Arbeitsposition bezeichnenden Daten wird dann die Zielführung durchgeführt, d.h. es wird kontinuierlich die IST-Position des Trägers mit der SOLL-Position, nämlich der Arbeitsposition, verglichen, und es werden in an sich beliebiger Weise dem Benutzer Informationen vermittelt, wie bzw. in welche Richtung er den Träger bewegen soll, um die Arbeitsposition zu erreichen.

Die Daten, welche die zu erreichende Arbeitsposition(en) bezeichnen, werden vorzugsweise bezüglich desselben Bezugssystems angegeben, wie die Daten, welche die Lage des Trägers bezeichnen, oder es müssen geeignete Transformationsschritte zusätzlich berücksichtigt werden.

Die nachfolgend noch näher zu beschreibende Vorrichtung zum Erfassen der Lage des Trägers ist dabei zweckmäßigerweise bezüglich des Werkzeugs, also beispielsweise der Bohrerspitze oder einer Markierspitze, referenziert, so dass nach Beendigung eines jeweiligen Zielführungsvorgangs das Werkzeug bzw. die Markierspitze sich in der gewünschten Arbeitsposition befindet.

Die Vorrichtung zum Erfassen der Lage des Trägers umfasst wenigstens eine, zweckmäßigerweise zwei und für die dreidimensionale Erfassung zweckmäßigerweise drei Entfernungsmessvorrichtung(en) und/oder Winkelmessvorrichtung(en). Es wäre an sich denkbar, dass eine einzige Entfernungsmessvorrichtung auf dem Träger vorgesehen wäre, wobei dann die Richtung veränderbar sein müsste, indem beispielsweise die Entfernungsmessvorrichtung um einen Winkel, der zweckmäßigerweise 90° betragen würde, verdrehbar angeordnet sein könnte. Währenddessen darf jedoch die Lage des Trägers nicht verändert werden. Es könnte dann die Entfernung des Trägers zu einer Wand und einem Boden oder zu einer Wand und einer Deckenbegrenzung ermittelt werden. Es wäre auch denkbar, dass die Vorrichtung zum Erfassen der Lage eine einzige Entfernungsmessvorrichtung und eine Winkelmessvorrichtung, beispielsweise in Form einer Horizontiervorrichtung, die im einfachsten Fall durch eine visuell ablesbare Libellenvorrichtung gebildet sein könnte, umfasst. Solchenfalls wäre es denkbar, dass der Träger exakt horizontal ausgerichtet wird und solange verschoben wird, bis die Entfernungsmessvorrichtung einen bezüglich seiner Lage im Bezugssystem bekannten Punkt überstreicht oder erfasst.

Als besonders vorteilhaft hat es sich erwiesen, wenn die Vorrichtung zum Erfassen der Lage zwei Entfernungsmessvorrichtungen, die in einem Winkel zueinander orientiert sind und eine Horizontiervorrichtung umfasst. Unter Verwendung einer solchen Vorrichtung ist es dann in einfacher Weise möglich, zunächst den Träger mittels der Horizontiervorrichtung bezüglich der Horizontalen auszurichten und dann mittels der beiden Entfernungsmessvorrichtungen die Entfernungen zu einer Wand und einem Fußboden oder einer Wand und der Decke oder auch zu sonstigen Objekten zu bestimmen.

Die Vorrichtung zum Erfassen der Lage des Trägers kann beispielsweise auf Lasertechnik beruhende Entfernungsmessgeräte umfassen. Solche Lasermessgeräte arbeiten im sog. Impuls- oder im Phasenmessverfahren und ermitteln anhand der ausgesandten und reflektierten elektromagnetischen Wellen die Entfernung des Lasers zum reflektierenden Objekt. Derartige Geräte sind bekannt und bedürfen daher hier keiner weiteren Beschreibung.

Des weiteren sind Geräte bekannt, die auf dem Messseilprinzip beruhen. Eine derartige Vorrichtung kann zwei im Abstand voneinander angeordnete Messseilrollen umfassen, deren jeweiliges eine Ende an dem handgeführten Träger fixierbar ist. Durch die Bewegung des Trägers an einer Wand oder im Raum werden dann die Messseile aus- bzw. eingerollt. Aus der jeweiligen Messseillänge und dem Abstand der Messrollen voneinander oder auch unter Bestimmung des Winkels der jeweiligen Messseile zu einer Verbindungsgeraden zwischen den Messrollen kann dann die Position des geometrischen Verbindungspunktes der am Träger befestigten Enden der Messseile errechnet werden.

Es wäre ferner denkbar, dass anstelle der Messrollen zwei insbesondere rotierbare Laserscanner verwendet werden, die beispielsweise auf dem Boden an einer Wand vorgesehen werden und eine parallel zu der Wand verlaufende Ebene abscannen. Wird nun an dem in der Fläche der Wand bewegten Träger eine Reflexionseinrichtung vorgesehen, so kann zu jedem Zeitpunkt die Entfernung und/oder der Winkel dieser Reflexionseinrichtung von den jeweiligen Laserscannern ermittelt werden. Hieraus kann bei bekanntem Abstand und/oder Winkel der Laserscanner voneinander, der auch unter Verwendung der Laserscanner ermittelt werden kann, wiederum der geometrische Ort des Trägers bezüglich einer durch die beiden Laserscanner gebildeten Basis errechnet werden. Wenn zudem Horizontiervorrichtungen an wenigstens einem der Lasersensoren verwendet werden, so lässt sich auch die Orientierung dieser Basis bezüglich der Horizontalen oder auch bezüglich einer durch einen Fußboden gebildeten Ebene ermitteln. Entsprechendes gilt auch für Vorrichtungen, die auf dem vorstehend beschriebenen Messseilprinzip beruhen.

Bei einer besonders einfach handhabbaren und daher vorteilhaften Ausführungsform der erfindungsgemäßen Einrichtung ist die Vorrichtung zum Erfassen der Lage an dem handgeführten Träger vorgesehen. Die Vorrichtung umfasst vorteilhafterweise zwei in einem Winkel zueinander orientierte Entfernungsmessvorrichtungen, vorzugsweise in der Form von laserbasierten Entfernungsmessgeräten. Diese beiden Entfernungsmessvorrichtungen sind dann vorzugsweise in einem Winkel von 90° zueinander orientiert. Vorzugsweise ist des weiteren eine Horizontiervorrichtung, beispielsweise in Form einer visuell ablesbaren Libelle, vorgesehen, wobei diese Horizontiervorrichtung derart angeordnet ist, dass die Horizontale parallel zu einer der Orientierungsachsen der Entfernungsmessvorrichtungen verläuft, was die Handhabung des Geräts in der Praxis stark vereinfacht. Ferner sind an dem Träger vorteilhafterweise Befestigungsmittel für Elemente der Vorrichtung zum Erfassen der Lage des Trägers und/oder Befestigungsmittel für das Werkzeuggerät und/oder Befestigungsmittel für das Markiermittel vorgesehen.

Um die Daten, welche die Lage des Trägers beschreiben, verarbeiten zu können, kann die Vorrichtung zum Erfassen der Lage des Trägers eine analoge oder digitale Schnittstelle zu einem Rechner umfassen. In entsprechender Weise kann die Zielführungsvorrichtung eine analoge oder digitale Schnittstelle zu einem Rechner umfassen. Der Rechner kann in die erfindungsgemäße Einrichtung integriert sein, und er kann sich beispielsweise zusammen mit der Vorrichtung zum Erfassen der Lage des Trägers auf dem Träger selbst befinden. Es ist aber auch denkbar, dass der Rechner an externer Stelle, insbesondere als Zentralrecheneinrichtung an weit entfernter Stelle vorgesehen ist. Es muss dann eine Kommunikation der Vorrichtung zum Erfassen der Lage des Trägers und der Zielführungsvorrichtung geschaffen werden. Es wäre ferner denkbar, dass die Zielführungsvorrichtung zusammen mit einem Rechner in das Werkzeuggerät selbst integriert oder auf dem Träger vorgesehen ist und damit zusammen mit dem Träger gehandhabt wird.

Die Zielführungsvorrichtung kann ferner eine Anzeigevorrichtung in Form eines visuell wahrnehmbaren Displays umfassen. Es können aber auch akustische Signalgeber, die auch Sprachsignale erzeugen und ausgeben können, vorgesehen sein.

Zur Ausführung einer Zielführung müssen jeweils die Arbeitsposition bezeichnende, d.h. definierende Daten bekannt sein und in der Zielführungsvorrichtung verarbeitbar zur Verfügung stehen. Zur Eingabe dieser Daten kann beispielsweise eine Eingabetastatur eines Rechners dienen. Der Benutzer wird dann in Weiterbildung der Erfindung menuegesteuert zur Eingabe von Daten aufgefordert, beispielsweise zur Eingabe eines Abstandswerts eines Gegenstands von einer Wand und eines weiteren Abstandswerts des Gegenstands vom Boden. Hierfür kann die Eingabetastatur in Form einer tragbaren Rechnereinrichtung ausgebildet sein, die an den Ort des Werkzeugeinsatzes durch den Benutzer mitgebracht wird. Es ist aber auch denkbar und vorteilhaft, dass insbesondere bei komplexen Anforderungen, wenn also eine Vielzahl von vorgegebenen Arbeitspositionen zu berücksichtigen sind, etwa bei der Anbringung großvolumiger Gegenstände, wie Hängeschränke, mit einer Vielzahl von Befestigungsmitteln, die hierfür erforderlichen Daten über die Vielzahl von Arbeitspositionen in anderer Weise für die Ausführung der Zielführung zur Verfügung stehen. So wäre es denkbar und vorteilhaft, dass diese Informationen in Form von Datensätzen über die jeweilige Objektgeometrie zur Verfügung stehen und beispielsweise vom Hersteller der zu positionierenden und anzubringenden Vorrichtungen datenverarbeitbar auf einem Datenträger oder Chip zur Verfügung gestellt werden. Es wäre dann z.B. hinreichend, dass der Benutzer lediglich den Abstand, beispielsweise eines an einer Wand zu montierenden Objekts zu einer Begrenzungswand und den Abstand des Objekts zum Boden eingibt und dann anhand einer eingegebenen oder zugeladenen Objektgeometrie sämtliche Arbeitspositionen, die von dem Werkzeuggerät angefahren werden müssen, für die Zielführung zur Verfügung stehen.

In noch weiterer Ausbildung der Erfindung wäre es denkbar, dass die Zielführungsvorrichtung bzw. ein Rechner der Zielführungsvorrichtung oder ein mit der Zielführungsvorrichtung kooperierender Rechner auf Daten, welche Objektgeometrien betreffen, zurückgreift, die zentral bei einem Hersteller der Objekte hinterlegt sind. Dieser Zugriff könnte über das Internet, über Funk oder über das drahtgebundene oder drahtlose Telekommunikationsnetz erfolgen. Es muss dann lediglich sichergestellt werden, dass die Datensätze von der für die Zielführung verwandten Software und dem der Software zugrundeliegenden Format korrekt erfasst und verarbeitet werden können. So existieren jedoch bekannte Standards, die einen solchen Datenaustausch problemlos möglich machen.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen der erfindungsgemäßen Einrichtung. In der Zeichnung zeigt:
- Figur 1a bis e: die Darstellung von sich häufig stellenden Basisanforderungen;
- Figur 2: eine bildliche Verdeutlichung einer bestimmten Basisanforderung;
- Figur 3: eine schematische Darstellung eines Trägers mit zwei Entfernungsmessvorrichtungen;
- Figur 4: eine Veranschaulichung der Arbeitsweise einer Einrichtung mit den Komponenten nach Figur 3;
- Figur 5: eine schematische Darstellung des Messseilprinzips zur Bestimmung der Lage;
- Figur 6: Verdeutlichung der Arbeitsweise einer auf dem Messseilprinzip beruhenden Einrichtung;
- Figur 7: schematische Darstellung einer mittels Laserscanner arbeitenden Einrichtung; und
- Figur 8: eine Ausführungsform einer erfindungsgemäßen Einrichtung zum zielgeführten Positionieren einer Bohrmaschine.

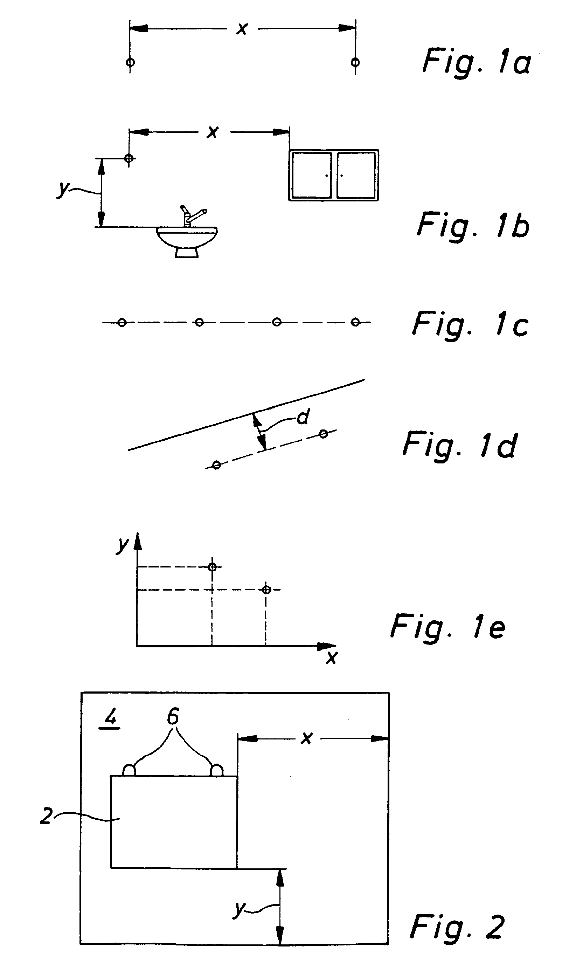

Figur 1 verdeutlicht eine Anzahl von sich häufig stellenden Basisanforderungen, die von einem Handwerker oder Monteur erfüllt werden müssen. So ist es beispielsweise häufig erforderlich, zwei Montagepositionen in möglichst exaktem relativem Abstand zueinander vorzubereiten, etwa durch Anbringung eines Bohrlochs (Figur 1a). Des weiteren kann es erforderlich sein, dass ein Objekt, etwa ein Einrichtungsgegenstand, wie im dargestellten Fall ein Schrank, und ein weiterer Gegenstand, wie im dargestellten Fall eine Spüle, in einem bestimmten absoluten Abstand zu einem anderen Gegenstand oder zu einem vorgegebenen Bezugspunkt anzuordnen sind (Figur 1b). Häufig stimmen die Montagepositionen nicht mit den Außenabmessungen der Objekte überein, da sich Befestigungsmittel, wie beispielsweise Ösen oder Öffnungen, durch welche dann beim Montageprozess Befestigungselemente wie Schrauben oder dergleichen hindurchgeführt werden, in einem Abstand zu den Außenabmessungen der Objekte befinden.

Ein weiteres sich häufig stellendes Problem ist die Anordnung mehrerer Montagepositionen auf einer Geraden (Figur 1c). Häufig muss eine lineare Anordnung von Montagepositionen in einem bestimmten Abstand zu einer Bezugslinie, beispielsweise einer Übergangslinie zwischen Decke und Wand, angeordnet werden (Figur 1d). Oder es stellt sich die Aufgabe, dass Montagepositionen und damit Arbeitspositionen für ein Werkzeuggerät bezüglich eine Ebene bildenden Koordinaten oder auch Raumkoordinaten festgelegt sind und angefahren werden müssen.

Figur 2 veranschaulicht eine weitere Basisanforderung, wonach ein dargestellter Gegenstand 2 in einem Abstand x zu einer rechten Begrenzungswand und einem Abstand y zu einer von einem Fußboden gebildeten Ebene an einer Wand 4 zu positionieren ist. Der Gegenstand umfasst im dargestellten Fall zwei Befestigungsösen, die sich von der Oberseite des Gegenstands weg erstrecken und im montierten Zustand von Schrauben durchgriffen werden. Der Durchgriffspunkt für die Schrauben definiert bei dieser Anforderung die vorzubereitende Montageposition für den Gegenstand 2, d.h. die Arbeitsposition für ein handgeführtes Werkzeuggerät in Form einer Bohrmaschine, mit welchem zwei Bohrlöcher an den entsprechenden Arbeitspositionen zu erstellen sind.

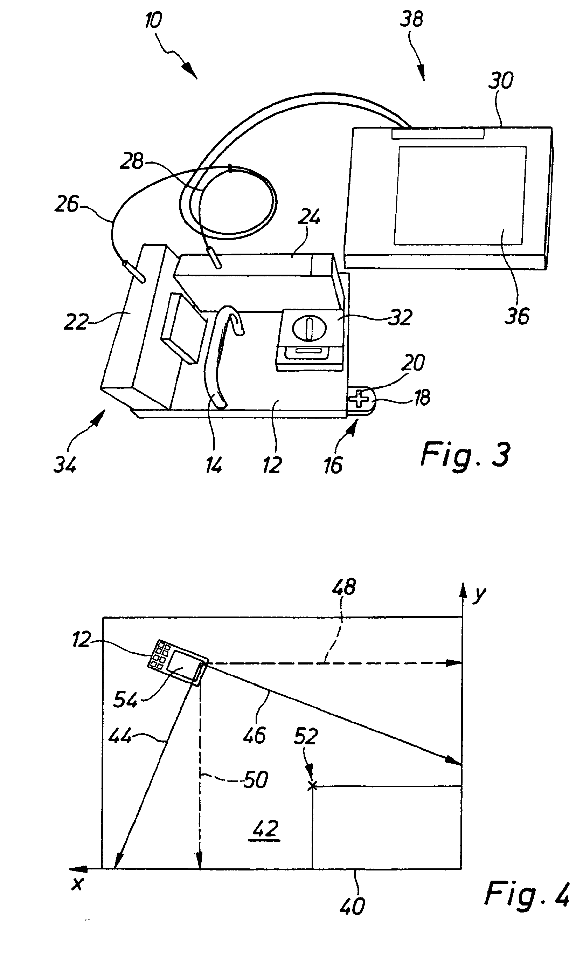

Figur 3 zeigt eine Darstellung einer nicht erfindungsgemäßen manuell handhabbaren Einrichtung zum zielgeführten Positionieren eines Markiermittels. Die Einrichtung 10 umfasst einen Träger 12 in Form einer Platte. Auf den Träger 12 ist ein Handgriff 14 zum Ergreifen des Trägers 12 vorgesehen. Ferner ist an den Träger ein Markiermittel 16 in Form einer angeformten Zunge 18 mit einer zentrierenden Öffnung 20 vorgesehen, durch welche ein Körner hindurchgeführt werden kann, oder mittels eines Bleistifts eine visuell wahrnehmbare Markierung auf der Unterlage angebracht werden kann. Es versteht sich, dass auch jede andere beliebige Ausführungsform eines Markiermittels denkbar wäre. Es könnten insbesondere aufwendigerere Ausführungsformen von Markiermitteln mit Spritzdüsen oder dergleichen vorgesehen sein.

Auf dem Träger 12 sind zwei Entfernungsmessvorrichtungen 22 und 24 in einem bevorzugten Winkel von 90° zueinander montiert. Bei den Entfernungsmessvorrichtungen 22, 24 handelt es sich um Laserentfernungsmessgeräte, die aus Überlagerungen der ausgesandten und reflektierten Wellen die Entfernung des reflektierenden Objekts in bekannter Weise ermitteln. Das jeweilige Signal der Entfernungsmessvorrichtungen 22, 24 wird über Datenübertragungskabel 26, 28 an einen Rechner 30 gegeben. Ein zunächst analoges oder digitales Messsignal der Entfernungsmessvorrichtung 22, 24 wird verstärkt und dann digitalisiert. Oder es liegt ein digitales Messsignal vor, das an den Rechner gegeben und dort weiterverarbeitet wird.

Des weiteren ist auf dem Träger 12 eine Horizontiervorrichtung 32 in Form einer visuell ablesbaren Libelle wie bei einer Wasserwaage vorgesehen. Diese kann vorzugsweise von einer elektronischen Libelle gebildet sein, deren Messwert in die Positionierung softwaregestützt und daher automatisiert einbezogen wird.

Es wird ausdrücklich darauf hingewiesen, dass anstelle des Markiermittels 16 oder zusätzlich zu dem Markiermittel 16 an dem Träger 12 eine Halterung für ein handgeführtes Werkzeuggerät vorgesehen sein könnte.

Die Entfernungsmessvorrichtungen 22, 24 und die Horizontiervorrichtung 32 bilden eine Vorrichtung 34 zum Erfassen der Lage des Trägers gegenüber einem Bezugssystem. Der Rechner 30 stellt zusammen mit einem Display 36 oder einer sonstigen, Informationen an einen Benutzer vermittelnden Einrichtung, wie z.B. ein Lautsprecher, eine Zielführungsvorrichtung 38 dar. Der Rechner steuert und berechnet die Erfassung der Lage des Trägers.

Figur 4 verdeutlicht den Vorgang des Einmessens des in Figur 4 nur schematisch dargestellten Trägers 12 mit den im Zusammenhang mit Figur 3 beschriebenen Komponenten zu einem Bezugssystem, was in Figur 4 mit dem Bezugszeichen 40 bezeichnet ist. Dieses Bezugssystem 40 wird beispielsweise durch die Übergangslinie einer Wand 42 zum Boden (x-Achse) und durch die Übergangslinie der Wand 42 zu einer seitlichen Begrenzungswand (y-Achse) gebildet. Zum Erfassen der Lage des Trägers 12 wird der Träger 12 mit seiner Basis- oder Grundplatte gegen die Wand 42 gelegt, und zwar zunächst so wie in Figur 4 dargestellt. Die Entfernungsmessvorrichtungen 22, 24 zeigen bzw. messen dann die Entfernung entlang der Schrägstrecken 44, 46. Der Benutzer kann nun unter Zuhilfenahme der Horizontiervorrichtung 32 den Träger 12 derart drehen, bis eine horizontale Ausrichtung erreicht ist (in Figur 4 gestrichelt dargestellt). In dieser Position erstreckt sich die Messstrecke, also im dargestellten Fall die Laserlichtstrecke der einen Entfernungsmessvorrichtung 24 entlang der Horizontalen 48 und die andere entlang der Vertikalen 50. Die Daten über die Entfernung des Trägers 12 bzw. der vorteilhafterweise auf das Markiermittel 16 referenzierten Entfernungsmessvorrichtungen 22, 24 in dieser horizontal ausgerichteten Position geben also den Abstand des Trägers 12 von der rechten Wand (x) und den Abstand vom Boden (y) an und bezeichnen somit die exakte Lage, d.h. Position und Orientierung des Trägers 12 bezüglich des Bezugssystems 40. Wenn diese Daten nun über Datenübertragungskabel 26, 28 oder über beliebige Schnittstellen, insbesondere über bidirektionale Funkeinrichtungen oder in sonstiger Weise an einen Rechner gegeben werden, so können diese Daten zur Ausführung einer Zielführung mit zu erreichenden Positionsdaten verglichen werden. Diese Positionsdaten können entweder als Objektdaten in den Rechner 30 eingegeben werden, oder sie können als objektspezifische Datensätze eingelesen werden oder bereits als Datensätze vorliegen. Im vorliegenden Fall könnte eine Arbeitsposition, die in Figur 4 mit dem Bezugszeichen 52 bezeichnet ist, in Form von x-, y-Koordinaten bezüglich desselben Bezugssystems 40 vorliegen. Es kann nun ein Vergleich der IST-Position des Trägers 12 mit diesen zu erreichenden Daten (x-, y-Koordinaten) der Arbeitsposition 52 verglichen werden. In Abhängigkeit von der Abweichung kann dann auf dem Display 36 des Rechners 30 nach Figur 3, oder wie in Figur 4 angedeutet, auf einem Display 54, welches auf dem Träger 12 vorgesehen ist, Informationen an den Benutzer vermittelt werden, wie er den Träger 12 zu führen hat, damit die Arbeitsposition 52 erreicht wird.

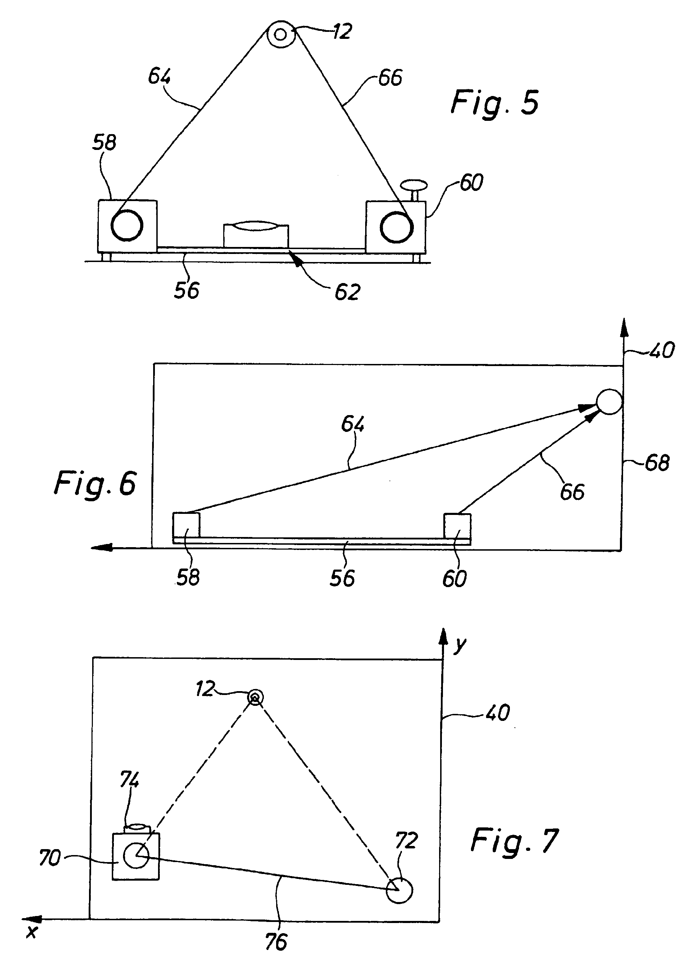

Figur 5 verdeutlicht das Messprinzip einer anderen Vorrichtung zum Erfassen der Lage des Trägers unter Verwendung des Messseilprinzips. Die schematische Darstellung zeigt zwei auf einer Basis 56 in einem bestimmten bekannten Abstand vorgesehene Messseilrollen 58, 60 sowie eine in Form einer Libelle angedeutete Horizontiervorrichtung 62 für die Basis 56. Die Messseilrollen 58, 60 umfassen jeweils ein ab- bzw. ausrollbares Messseil 64, 66, welches mit dem jeweiligen freien Ende am Träger 12 befestigt ist. Über die jeweils von der Messseilrolle 58, 60 abgezogene Seillänge kann durch Umsetzung der Drehbewegung der Messseilrollen in ein elektrisches Signal die Messlänge ermittelt und entsprechend dem Messsignal der Entfernungsmessvorrichtungen 22, 24 der Ausführungsform nach Figur 3 an einen Rechner gegeben werden.

Der im Zusammenhang mit Figur 4 beschriebene Prozess der Lagebestimmung des Trägers, das Einmessen des Trägers bezüglich eines Bezugssystems, ist für das Messseilprinzip in Figur 6 dargestellt. Zum Einmessen der Lage der Basis 56 und der Messseilrollen 58, 60 wird der Träger mit seinem Referenzpunkt im dargestellten Fall an die rechte Begrenzungswand 68 geführt. Es kann nun aus der Länge des Messseils 64, 66 und bei bekanntem Abstand der Messseilrollen 58, 60 entlang der Basis 56 der Abstand der Messseilvorrichtung von der rechten Begrenzungswand 68 ermittelt werden. Dies ist aber erforderlich, um eine momentane Lage des Trägers und der Messeilvorrichtung bezüglich des wiederum mit dem Bezugszeichen 40 bezeichneten und in derselben Weise aufgespannten Bezugssystems zu erreichen. Nach diesem Einmessvorgang kann über die Entfernungsmessvorrichtungen, die im vorliegenden Fall durch die Messseilrollen 58, 60 gebildet werden, wiederum zu jedem beliebigen Zeitpunkt die momentane Position des Trägers bezüglich dem Bezugssystem 40 ermittelt und zur Ausführung einer Zielführung herangezogen werden.

Figur 7 verdeutlicht eine weitere Ausführungsform, wobei zwei rotierende Laserscanner 70, 72 mit nicht notwendigerweise horizontaler Anordnung zueinander vorgesehen sind. Die Laserscanner 70, 72 scannen mit ihren Laserstrahlen die Zeichnungsebene. Am Gehäuse des Scanners 70 ist eine Horizontiervorrichtung 74 vorgesehen, die nach horizontaler Ausrichtung des Scanners 70 eine Bestimmung des Winkels zwischen der geometrischen Verbindungslinie zum zweiten Laserscanner 72 und der Horizontalen möglich ist. Man kann bei bekannter Basisentfernung entweder 2 Strecken- oder 2 Winkelmessungen ausführen, um die Lage des Trägers zu bestimmen. Im Prinzip könnte mittels eines einzigen Laserscanners mit einer Horizontiervorrichtung eine Positionsbestimmung des Trägers durchgeführt werden.

Es kann bei Anwendung dieser Laserscanner 70, 72 als Entfernungsmessvorrichtungen entweder, wie vorausgehend im Zusammenhang mit dem Messseilprinzip erläutert, die Entfernung zu dem Träger 12 jeweils ermittelt werden oder es kann über zwei Winkelmessungen die eindeutige Position des Trägers 12 zu der Basis, also zu der geometrischen Verbindungslinie 76 der beiden Scanner 70, 72 ermittelt werden. Die Lage der Scanner 70, 72 bezüglich des wiederum mit dem Bezugszeichen 40 bezeichneten Bezugssystems kann, wie in Figur 6 erörtert und dargestellt, durch Berühren oder Anlagen des Trägers an eine eine Achse des Bezugssystems 40 bildende Wand oder Bodenfläche ermittelt werden.

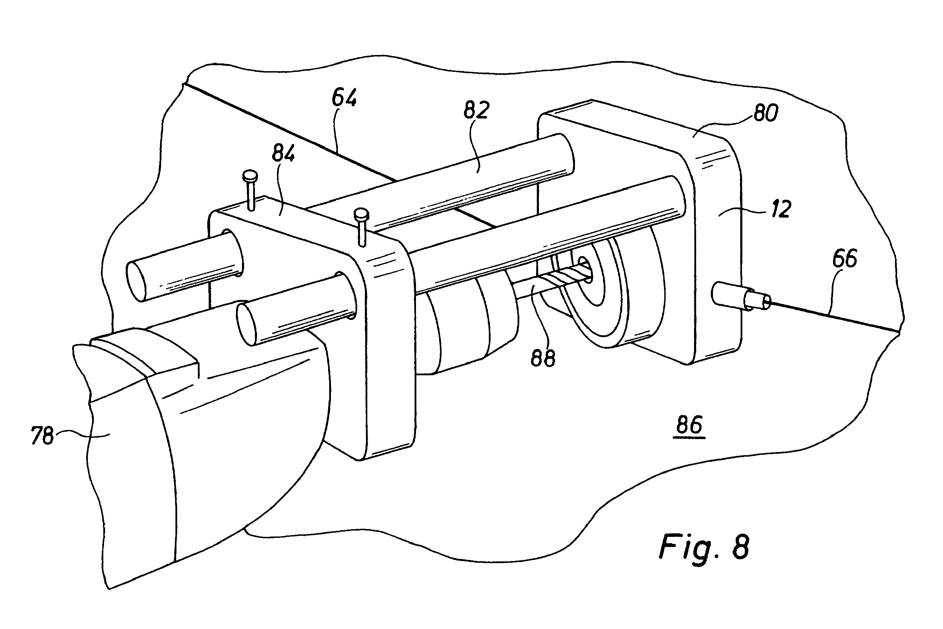

Schließlich zeigt Figur 8 eine spezielle und vorteilhafte Ausführungsform der erfindungsgemäßen Einrichtung, wobei ein Elektrowerkzeuggerät in Form einer Bohrmaschine 78 an einem Träger 12 vorgesehen ist. Der Träger 12 ist über Messseile 64, 66 mit auf dem Messseilprinzip beruhenden Entfernungsmessvorrichtungen verbunden (es könnten aber auch Laser-Entfernungsmesssensoren verwendet werden). Der Träger 12 umfasst ein plattenförmiges Basisteil 80, von dem sich zwei Führungsstangen 82 in Richtung der Bohrspindel wegerstrecken. Auf diesen Führungsstangen 82 gleitet ein Befestigungsmittel 84 in Form einer Spannvorrichtung, welche den Werkzeughals der Bohrmaschine 78 klemmt.

Nach Ausführung einer Zielführung ist der Träger 12 derart an der Wand 86 positioniert, dass sich die Bohrspitze des Bohrers 88 exakt an der zu erreichenden Arbeitsposition befindet. Indem nun in Bohrrichtung ein Druck auf die Bohrmaschine 78 ausgeübt wird, gleitet diese mit dem Befestigungsmittel 84 bezüglich der Führungsstäbe 82, und es wird hierdurch exakt an der Arbeitsposition ein Loch gebohrt. Es versteht sich, dass zwischen der Basisplatte 80 und dem Führungsmittel 84 an sich beliebige vorspannende Mittel vorgesehen sein können, derart, dass bei Nachlassen des Drucks auf die Bohrmaschine 78 der Bohrer wieder aus dem Bohrloch herausgezogen wird. Ferner können Bohrtiefenbegrenzungsmittel vorgesehen sein.

## Patentansprüche

1. Manuell handhabbare Einrichtung (10) zum zielgeführten Positionieren eines handgeführten elektromotorisch antreibbaren Werkzeuggeräts, insbesondere einer Bohrmaschine (78), in eine vorgegebene oder vorgebbare Arbeitsposition (52), mit einem handgeführten Träger (12) für das Handwerkzeuggerät, wobei der Träger (12) eine ebene Auf- oder Anlagefläche an die die Arbeitsposition einschließende Fläche aufweist, mit einer Vorrichtung (34) zum Erfassen der Lage des Trägers (12) gegenüber einem Bezugssystem (40), und mit einer Zielführungsvorrichtung (38), welche unter Verarbeitung von die Lage des Trägers (12) bezeichnenden Daten und von die Arbeitsposition (52) bezeichnenden Daten einem Benutzer Informationen zum Führen des Trägers (12) vermittelt, wobei der Träger (12) ein Basisteil (80) und ein über Führungsmittel (82) gegen das Basisteil (80) verstellbares Befestigungsmittel (84) für das handgeführte Werkzeuggerät aufweist, wobei die Verstellbarkeit in Richtung der Arbeitsbewegung des Werkzeugs erfolgt.

2. Einrichtung nach Anspruch 1, **dadurch gekennzeichnet, dass** die Vorrichtung (34) zum Erfassen der Lage wenigstens eine oder vorzugsweise zwei oder für die dreidimensionale Erfassung drei Entfernungsmessvorrichtung(en) (22, 24; 58, 60; 70, 72) und/oder Winkelmessvorrichtung(en) umfasst.

3. Einrichtung nach Anspruch 1 oder 2, **dadurch gekennzeichnet, dass** die Vorrichtung (34) zum Erfassen der Lage zwei Entfernungsmessvorrichtungen (22, 24), die in einem festen oder vorgebbaren Winkel zueinander orientiert sind, und eine Horizontiervorrichtung (32) umfasst.

4. Einrichtung nach Anspruch 1, 2 oder 3, **dadurch gekennzeichnet, dass** die Vorrichtung (34) zum Erfassen der Lage an dem handgeführten Träger (12) vorgesehen, insbesondere lösbar montierbar ist.

5. Einrichtung nach einem oder mehreren der vorstehenden Ansprüche, **dadurch gekennzeichnet, dass** der Träger (12) von dem Gehäuse des Werkzeuggeräts gebildet ist.

6. Einrichtung nach einem oder mehreren der vorstehenden Ansprüche, **dadurch gekennzeichnet, dass** die Vorrichtung zum Bestimmen der Lage des Trägers (12) eine analoge oder digitale Schnittstelle zu einem Rechner (30) umfasst.

7. Einrichtung nach einem oder mehreren der vorstehenden Ansprüche, **dadurch gekennzeichnet, dass** die Zielführungsvorrichtung (38) eine analoge oder digitale Schnittstelle zu einem Rechner (30) umfasst.

8. Einrichtung nach einem oder mehreren der vorstehenden Ansprüche, **dadurch gekennzeichnet, dass** sie einen Rechner (30) zum Verarbeiten der Daten der Vorrichtung zur Erfassung der Lage des Trägers (12) und/oder der Zielführungsvorrichtung (38) umfasst.

9. Einrichtung nach einem oder mehreren der vorstehenden Ansprüche, **dadurch gekennzeichnet, dass** an dem Träger (12) ein Rechner vorgesehen ist.

10. Einrichtung nach einem oder mehreren der vorstehenden Ansprüche, **dadurch gekennzeichnet, dass** die Zielführungsvorrichtung (38) eine Anzeigevorrichtung (36) umfasst

11. Einrichtung nach einem oder mehreren der vorstehenden Ansprüche, **dadurch gekennzeichnet, dass** Basisteil (80) und Befestigungsmittel (84) gegeneinander vorgespannt sind, so dass sich im nicht betätigten Zustand des Werkzeuggeräts stets dieselbe Stellung zueinander ergibt.

## Claims

1. Handheld device (10) for the precise positioning of an electric-motor-driven handheld power tool, in particular a drill (78), in a pre-defined or pre-definable operating position (52), comprising a manually guided support (12) for the hand-held power tool, the support (12) having a planar support or contact surface on the surface which includes the operating position, comprising a means (34) for sensing the position of the support (12) based on a reference system (40), and comprising a precision guidance means (38) which provides a user with information for guiding the support (12) by processing data indicating the position of the support (12) and data indicating the operating position (52), wherein the support (12) comprises a base part (80) and a fastening means (84), which can be adjusted against the base part (80) using a guide means (82), for the hand-held power tool, the adjustment taking place in the direction of the operational movement of the tool.

2. Device according to claim 1, **characterised in that** the means (34) for sensing the position comprises at least one or preferably two or, for three-dimensional sensing, three distance measuring means (22, 24; 58, 60; 70, 72) and/or angle measurement means.

3. Device according to either claim 1 or claim 2, **characterised in that** the means (34) for sensing the position comprises two distance measuring means (22, 24), which are oriented at a fixed or pre-definable angle to one another, and a levelling means (32).

4. Device according to any one of claims 1, 2 or 3, **characterised in that** the means (34) for sensing the position is provided, and in particular is detachably mounted, on the manually guided support (12).

5. Device according to one or more of the preceding claims, **characterised in that** the support (12) is formed from the housing of the tool.

6. Device according to one or more of the preceding claims, **characterised in that** the means for determining the position of the support (12) comprises an analogue or digital interface to a computer (30).

7. Device according to one or more of the preceding claims, **characterised in that** the precision guidance means (38) comprises an analogue or digital interface to a computer (30).

8. Device according to one or more of the preceding claims, **characterised in that** it comprises a computer (30) for processing the data of the means for sensing the position of the support (12) and/or the precision guidance means (38).

9. Device according to one or more of the preceding claims, **characterised in that** a computer is provided on the support (12).

10. Device according to one or more of the preceding claims, **characterised in that** the precision guidance means (38) comprises a display means (36).

11. Device according to one or more of the preceding claims, **characterised in that** the base part (80) and fastening means (84) are biased against one another in a manner which always results in the same position thereof, relative to one another, in the non-actuated state of the tool.

## Revendications

1. Appareil (10) à actionnement manuel pour le positionnement de visée d'un outillage guidé à la main, entraîné par moteur électrique, en particulier d'une perceuse (78), dans une position de travail prédéfinie ou prédéfinissable (52), avec un support (12) guidé à la main pour l'outillage à main, dans lequel le support (12) présente une surface plane de pose ou d'appui contre la surface incluant la position de travail, avec un dispositif (34) pour détecter la position du support (12) par rapport à un système de référence (40), et avec un dispositif de visée (38), qui, par le traitement de données désignant la position du support (12) et de données désignant la position de travail (52), transmet à un utilisateur des informations pour le guidage du support (12), dans lequel le support (12) présente une pièce de base (80) et des moyens de fixation (84) réglables par l'intermédiaire de moyens de guidage (82) par rapport à la pièce de base (80) pour l'outillage guidé à la main, la possibilité de réglage s'effectuant en direction du mouvement de travail de l'outil.

2. Appareil selon la revendication 1, **caractérisé en ce que** le dispositif (34) pour la détection de la position comprend au moins un ou de préférence deux, ou bien trois - pour la détection tridimensionnelle - dispositifs de mesure de distance (22, 24 ; 58, 60 ; 70, 72) et/ou dispositifs de mesure d'angle.

3. Appareil selon la revendication 1 ou 2, **caractérisé en ce que** le dispositif (34) pour la détection de la position comprend deux dispositifs de mesure de distance (22, 24) qui sont orientés l'un par rapport à l'autre sous un angle fixe ou prédéfinissable, ainsi qu'un dispositif d'azimutage (32).

4. Appareil selon la revendication 1, 2 ou 3, **caractérisé en ce que** le dispositif (34) pour la détection de la position est prévu sur le support (12) guidé à la main, en particulier installé de façon amovible.

5. Appareil selon l'une quelconque ou plusieurs des revendications précédentes, **caractérisé en ce que** le support (12) est formé par le boîtier de l'outillage.

6. Appareil selon l'une quelconque ou plusieurs des revendications précédentes, **caractérisé en ce que** le dispositif pour la détermination de la position du support (12) comprend une interface analogique ou numérique avec un ordinateur (30).

7. Appareil selon l'une quelconque ou plusieurs des revendications précédentes, **caractérisé en ce que** le dispositif de visée (38) comprend une interface analogique ou numérique avec un ordinateur (30).

8. Appareil selon l'une quelconque ou plusieurs des revendications précédentes, **caractérisé en ce qu'**il comprend un ordinateur (30) pour le traitement des données du dispositif pour la détection de la position du support (12) et/ou du dispositif de visée (38).

9. Appareil selon l'une quelconque ou plusieurs des revendications précédentes, **caractérisé en ce qu'**un ordinateur est prévu sur le support.

10. Appareil selon l'une quelconque ou plusieurs des revendications précédentes, **caractérisé en ce que** le dispositif de visée (38) comprend un dispositif d'affichage (36).

11. Appareil selon l'une quelconque ou plusieurs des revendications précédentes, **caractérisé en ce que** la pièce de base (80) et les moyens de fixation (84) sont précontraints les uns par rapport aux autres, de sorte qu'à l'état non actionné de l'outillage, il en résulte toujours la même position mutuelle.
